# EUROPEAN PATENT APPLICATION

(11) **EP 4 509 470 A1**
(43) Date of publication of application: **19.02.2025**
(21) Application number: 23191777.4
(22) Date of filing: 16.08.2023
(51) Int. Cl.: C02F 9/00, C02F 1/04, C02F 1/20, C02F 1/28, C02F 1/66, C02F 1/72, C02F 1/78, C02F 3/20, C02F 103/00, C02F 103/20, C02F 3/12

(54) **METHOD AND SYSTEM FOR WASTEWATER TREATMENT AND NUTRIENT RECOVERY**

(71) Applicant: EAWAG Eidg. Anstalt für Wasserversorgung Abwasserreinigung und Gewässerschutz, 8600 Dübendorf (CH)
(72) Inventor: UDERT, Kai, 8700 Küsnacht (CH); HEUSSER, Aurea, 8304 Wallisellen (CH)
(74) Representative: Troesch Scheidegger Werner AG

(57) **Abstract**

The present invention pertains to a method for wastewater treatment comprising the following steps:

(a) contacting wastewater with microorganisms to diminish the chemical oxygen demand (COD) in the wastewater, preferably in a MABR,

(b) contacting the wastewater during or after step (a) with means for diminishing micropollutant concentration,

(c) contacting the wastewater obtained after steps (a) and (b) with nitrifying bacteria to oxidize ammonia to nitrite and/or nitrate,

Step (b) has the purpose of reducing toxicity of micropollutant for the nitrifying bacteria.

The present invention is further directed to a corresponding system and use of the system.

## Description

The present invention pertains to a method for wastewater treatment comprising the diminishment of chemical oxygen demand, the diminishment of micropollutant concentration and optionally the oxidation of ammonia to nitrate or nitrite. The present invention is further directed to a corresponding system and a use of the system.

The provision of well-operating sanitation systems is an essential contribution to improving health systems and the environment (Gawel and Bretschneider, Water International, 42(5):505-526, 2017). Nevertheless, more than 35 % of the world's population lack access to an improved sanitation system. Mainly affected are countries from the global south, where the wastewater management is mostly weak, especially in fast growing cities or in remote settlements.

It is the objective of the present invention to provide an improved method for wastewater treatment, optionally a method for wastewater treatment that recovers nutrients.

The above problem is solved by the method according to claim 1.

In a first aspect, the present invention is directed to a method for wastewater treatment comprising the following steps:
(a) contacting wastewater with microorganisms to diminish the chemical oxygen demand (COD) in the wastewater,
(b) contacting the wastewater during or after step (a) with means for diminishing micropollutant concentration, and
(c) optionally contacting the wastewater obtained after steps (a) and (b) with nitrifying bacteria to oxidize ammonia to nitrite and/or nitrate.

It was surprisingly found that contacting wastewater during or after step (a) with means for diminishing micropollutant concentration is effective for treating wastewater even before the biological treatment is complete. The combination of steps (a) and (b) in the present method leads to a robust and effective treatment of wastewater which, after steps (a) and (b) are carried out, can be released into the environment without representing a source of pollution or health risk regarding organic pollutants. For example, hospital wastewater can be treated by method steps (a) and (b) to avoid pharmaceuticals (i.e. micropollutants) from being released into the environment.

Furthermore, when optional step (c) is included in the method, it was surprisingly found that the separation of COD diminishment and nitrification, as well as diminishing micropollutant concentration before nitrification, significantly improves the efficacy compared nitrification processes in known systems. Without wishing to be bound by theory, it is believed that diminishing micropollutant concentration before step (c) constitutes an additional protection of the nitrifying bacteria which may be sensitive to micropollutants such as antibiotics. Optional step (c) provides an efficient way for recovering nutrients such as nitrate from wastewater (e.g. from ammonia-rich wastewater, e.g. urine- or manure-comprising wastewater), which nutrients can be recycled, e.g. in the form of a fertilizer.

The term "contacting", as used herein, includes any form of bringing at least two components together in order to allow for a functional interaction between the at least two components, for example by mixing (optionally including, e.g., stirring) the components or immersing one of the components in the other component.

The term "wastewater" is used throughout the method of the present invention to simplify reading. However, it is clear to the skilled person that the wastewater in the individual steps of the present method (e.g. before step (a), and during and after steps (b) and (c)) is not of the same composition. The wastewater subjected to step (a) can be any wastewater, in particular untreated waste streams, including sewage, urine, manure, greywater, blackwater and industrial wastewater. During step (a), the COD is diminished in the wastewater and the wastewater after step (a) differs from the untreated wastewater in at least the COD. The wastewater after step (a) excluding step (b) can be termed COD-diminished wastewater.

The term "diminishing the chemical oxygen demand (COD)", as used herein, means that at least a detectable and quantifiable amount of (biodegradable) COD is removed, and optionally means that a significant part (e.g., > 50%) of the (biodegradable) COD in the wastewater is removed. In other words, diminishing the COD refers to diminishing the amount of organics which can be oxidized and the presence of which can be characterized and quantified by COD. For example, step (a) can primarily serve to simplify the subsequent steps of micropollutant removal(b) and nitrification(c) or other additional treatment; it is not mandatory that step (a) serves to reach effluent standards.

During step (b), the micropollutant concentration in the COD-diminished wastewater is diminished and the wastewater after step (b) has a lower concentration of micropollutants. The wastewater after step (b) can be termed micropollutant- and COD-diminished wastewater.

The term "diminishing micropollutant concentration", as used herein, means that the micropollutant concentration is diminished at least by a detectable and quantifiable amount (e.g. a detectable amount of micropollutants is removed from the wastewater), and optionally means that the micropollutant concentration in the wastewater is diminished by at least 80% of the initial concentration.

After steps (a) and (b), the wastewater is considered treated regarding micropollutants, and optimized for further biological treatment, e.g., nitrification, which would otherwise be hampered by the presence of micropollutants.

During optional step (c), ammonia - if present - in the micropollutant- and COD-diminished wastewater is at least partially oxidized to nitrite and/or nitrate, and the malodor caused by the ammonia is vastly removed. The wastewater after step (c) can be termed nitrogen-treated wastewater. The nitrogen-treated wastewater can be, e.g., essentially odor-free and, for example, can be condensed to a concentrated fertilizer.

For example, the wastewater admitted to step (a) can be rich in ammonia, such as urine or manure.

In an embodiment of the present invention, the wastewater obtained after steps (a)/(b) and/or after step (c) is not again subjected to step (a).

The microorganisms for use in step (a) of the present method can be any microorganisms that are suitable for diminishing COD in wastewater. Such microorganisms and the mode of their use are known in the art (see, e.g., Chen, G., Ekama, G.A., van Loosdrecht, M.C.M. and Brdjanovic, D. (2020) Biological Wastewater Treatment: Principles, Modeling and Design, IWA Publishing) and include, but are not limited to, heterotrophic bacteria (including polyphosphate accumulating bacteria) and autotrophic bacteria. For example, the microorganisms can be commonly obtained from (e.g. municipal) wastewater treatment plants or soils.

In step (b) of the instant method, the wastewater can be contacted with the microorganisms and the means for diminishing micropollutants at the same time. Alternatively, the wastewater can be contacted with the means for diminishing micropollutants after the wastewater has already been contacted with the microorganisms (e.g. during the process of COD diminishment), and/or after (biological) COD diminishment is considered completed.

Diminishing micropollutant concentration can be achieved, e.g., also by adsorbing micropollutants to a suitable compound (e.g. activated carbon), wherein the compound with the adsorbed micropollutants can be, e.g., separated from the wastewater. Alternatively, micropollutant concentration can be diminished by chemically modifying, e.g. oxidizing, or decomposing micropollutants to compounds or fragments thereof which are no longer considered micropollutants.

For example, 200 to 650 g/L, optionally 350 to 550 g/L, of granular activated carbon, or 1 to 5000 mg/L, optionally 2 to 60 mg/L, of powdered activated carbon can be used in step (b).

The term "micropollutants", as used herein, is commonly understood in the art of environmental sciences. Micropollutants are recognized and characterized due to their presence in trace amounts among different environmental matrices and living organisms. Micropollutants include pharmaceuticals, personal care products, detergents, pesticides, stimulants, trace metals, persistent organic pollutants and artificial sweeteners (Abbasi et al., Environmental Micropollutants 2022, pages 331-337). In an embodiment, the micropollutants are organic micropollutants.

During step (c) at least a detectable and quantifiable amount of ammonia is oxidized to nitrite and/or nitrate.

Detection and quantification of COD, micropollutants, ammonia and nitrate can be done by spectrophotometry for COD, ammonia, nitrite and nitrate, by liquid chromatography (e.g. triple quadrupole mass spectrometry (LC-MS)) for micropollutants, and/or by ion chromatography or spectrophotometry for ammonia, nitrite and nitrate measurements.

The nitrifying bacteria for use in step (c) of the present method can be any bacteria that are suitable for oxidizing at least one step in the oxidation of ammonia to nitrate including ammonia-oxidizing bacteria and nitrite-oxidizing bacteria. Suitable nitrifying bacteria are known in the art and include, but are not limited to, species of genera such as Nitrosomonas, Nitrosococcus, Nitrobacter, Nitrospina, Nitrospira and Nitrococcus. For example, the nitrifying bacteria can be obtained from (e.g. municipal) wastewater treatment plants or from soils.

In an embodiment of the method according to the present invention, which may be combined with any of the embodiments of the method still to be addressed unless in contradiction, the method is one, wherein
- before step (a), the method further comprises step (a0) of separating solids from the wastewater, and/or
- the wastewater in step (a) is urine or manure, and/or
- steps (a) and/or (c) are carried out in a biofilm or suspended biomass system, optionally in a membrane aerated biofilm reactor (MABR).

The wastewater in step (a) can also be any ammonia-rich solution, including, e.g., a digestate from a reactor treating food waste.

The term "solids" as used herein refers to compounds which are visibly not dissolved in the wastewater, including e.g. feces, toilet paper, biomass, woodchips, sand, straw and sawdust.

The wastewater subjected to step (a) can be wastewater comprising ammonia, e.g. ammonia-rich wastewater, such as urine or manure. The wastewater subjected to step (a) may be (e.g. essentially pure) urine that was optionally stored in an anaerobic tank before step (a). The method of the present invention optionally further comprises step (a00) before step (a) and after step (a0) of storing urine in an anaerobic environment (e.g. tank). For example, during the storing, sulfate reducing bacteria may produce sulfide and urea may be hydrolyzed and organics may be fermented.

In an embodiment, gaseous ammonia can be collected during steps (a) and/or (b), and may be re-administered to step (c), e.g. in order to lower the loss of ammonia and increase the amount of fixed nitrogen in the course of the method. Suitable means for measuring gaseous ammonia quantities are known in the art and can be used to determine the amount.

Steps (a) and/or (c) can be carried out in a biofilm or suspended biomass system, which are known in the art, see, e.g. Fumasoli, A., et al. (2016). "Operating a pilot-scale nitrification/distillation plant for complete nutrient recovery from urine." Water Science and Technology 73(1): 215-222. Optionally a membrane aerated biofilm reactor (MABR) can be used for steps (a) and/or (c) which is also known in the art, see, e.g., Udert, K.M. and Wächter, M. (2012) Complete nutrient recovery from source-separated urine by nitrification and distillation. Water Research 46(2), 453-464.

Optionally air and/or oxygen can be passed through the biofilm system, suspended biomass system or MABR, and/or emerging gasses (e.g. gaseous ammonia) can be collected from the biofilm system, suspended biomass system or MABR.

In an embodiment of the method according to the present invention, which may be combined with any of the embodiments of the method still to be addressed unless in contradiction, the means for diminishing micropollutant concentration are selected from the group consisting of activated carbon, optionally granular or powdered activated carbon, optionally an activated carbon filter, an oxidation process, optionally ozone treatment, optionally ozone treatment in the presence of a catalyst, optionally a titanium catalyst, optionally TiO₂.

The means for diminishing micropollutant concentration, e.g. granular or powdered activated carbon, can be added to the wastewater. Alternatively, the wastewater can be passed through a container (e.g. a filter device) comprising the activated carbon (e.g. granular activated carbon). For example, the activated carbon adsorbs micropollutants and, thus, removes these from the wastewater. Multiple, e.g. two, containers (e.g. filter devices) comprising the activated carbon (e.g. granular activated carbon) through which the wastewater is passed can be used in series or in parallel. It was surprisingly found that filtration of wastewater during or after step (a) through a container comprising activated carbon does not substantially lead to filter blockage, unlike the filtration of wastewater before step (a) (see Example 1 below). Micropollutants can be removed by activated carbon (e.g. powdered activated carbon) added to the wastewater during and/or after step (a) (see Example 2 below).

The optional oxidation process for diminishing micropollutant concentration can, e.g., be performed using a separate tank or chamber called an ozone contactor. The contactor is, e.g., designed to allow efficient mixing and contact between the wastewater and ozone gas. The wastewater is typically introduced into the ozone contactor either as a batch or through a continuous flow, preferably in a plug flow setup.

In an embodiment of the method according to the present invention, which may be combined with any of the embodiments of the method still to be addressed unless in contradiction, the micropollutants are selected from the group consisting of pharmaceuticals, optionally antibiotics, artificial sweeteners and detergents.

Exemplary pharmaceuticals include antibiotics, analgesics (optionally non-steroidal analgesics, anti-inflammatory agents, antiphlogistics), antiepileptic drugs, antihistamines, antihypertensive drugs (e.g. beta blockers), diuretics, sartanes, antiretroviral agents, local anesthetics, and antipsychotics (e.g. antidepressants or tranquilizers). Exemplary artificial sweeteners include aspartame, saccharin, sucralose, stevia, cyclamate and acesulfame.

Exemplary detergents include citric acid, javel, basic cleaners, WC-cleaners and maintenance cleaners.

In an embodiment of the method according to the present invention, which may be combined with any of the embodiments of the method still to be addressed unless in contradiction, the method is one, wherein
- the COD concentration is diminished by about 70 to 80 %, optionally about 50 to 90 %, in step (a), and/or
- the micropollutant concentration is diminished by about 60 to 100 %, optionally by about 80 to 100 % in step (b), and/or
- about 20 to 100 %, optionally about 40 to 60 %, of the ammonia concentration is oxidized to nitrite and/or nitrate.

The concentrations indicated above in the context of COD, micropollutants and ammonia can be measured in mg O₂/L for COD, pg/L for micropollutants and mg N/L for ammonia and the respective diminishment is expressed in % of these units.

The concentrations of COD, micropollutants and ammonia can be measured by spectrophotometry for COD, Liquid chromatography - triple quadrupole mass spectrometry (LC-MS) for micropollutants, ion chromatography or spectrophotometry for ammonia and nitrate/nitrite measurements.

In an embodiment of the method according to the present invention, which may be combined with any of the embodiments of the method still to be addressed unless in contradiction,
- the pH in step (a) is set to about 6 to 9.5, optionally 8 to 9, and/or
- the pH in step (c) is set to about 2.3 to 7.5, optionally 6 to 7.

The pH may be adjusted by means known in the art, e.g. by dosing acids or bases, or with biological processes such as nitrification.

In an embodiment of the method according to the present invention, which may be combined with any of the embodiments of the method still to be addressed unless in contradiction, step (b) is performed by transferring the wastewater of step (a) through an activated carbon filter before step (c) is performed. The activated carbon filter may comprise, e.g. granular activated carbon.

In an embodiment of the method according to the present invention, which may be combined with any of the embodiments of the method still to be addressed unless in contradiction, the method further comprises
- step (a1) of collecting, and optionally storing gaseous ammonia from step (a) and introducing the gaseous ammonia into the wastewater of step (c), optionally wherein steps (a) and/or (c) are performed in a MABR; and/or
- step (d) of distilling the wastewater obtained from step (c) to less than about 20% of the volume.

As noted above, steps (a) and/or (c) can be performed in a biofilm or suspended biomass system, optionally an MABR. For the purpose of storing gaseous ammonia and introducing this gas into the wastewater of step (c) any system or container can be used that is suitable for collecting and re-introducing gas. Additionally, suitable means for measuring the amount and flow of gas can be used to control gas administration.

The step of distilling can be replaced by other common methods for removing water and isolating nutrients, e.g. nitrate, e.g. by reverse osmosis or freeze drying.

In an embodiment of the method according to the present invention, which may be combined with any of the embodiments of the method still to be addressed unless in contradiction,
- step (a) is performed for about 2 to 100 h, optionally for about 24 to 60 h, and/or
- step (c) is performed for about 24 to 240 h, optionally for about 70 to 120 h.

Further objectives are achieved by a system according to claim 10, or by a use as described below.

In another aspect which may be combined with any of the embodiments or aspects preaddressed or still to be addressed unless in contradiction, the present invention is directed to a system for wastewater treatment comprising:
(i) a first container comprising microorganisms suitable for diminishing the chemical oxygen demand (COD) in wastewater,
(ii) means for diminishing micropollutant concentration, and
(iii) optionally a second container comprising nitrifying bacteria suitable for oxidizing ammonia to nitrite and/or nitrate,
wherein
an outlet of the first container is at least temporarily fluidly connected, optionally detachably fluidly connected, to an inlet of the second container, and
the means for diminishing micropollutant concentration are positioned in the first container or between the outlet of the first container and the inlet of the second container.

The definitions provided in the context of the present method all apply, mutatis mutandis, to the system described herein unless in contradiction. Depending on the dimensions and number or nature of components, the system of the present invention can be characterized as a device, apparatus or a facility.

For example, step (a) of the present method can be carried out in the first container, and step (c) can be carried out in the second container.

The first and second container of the present system are at least temporarily fluidly connected. For example, the term "at least temporarily fluidly connected" includes that the content of the first container can be introduced into the second container, e.g., by transfer through tubes or pipes or by pouring. The tubes or pipes can be detachable from either container. The system may further comprise suitable means for moving the wastewater through the tubes or pipes, e.g. a pump. The first and/or second container may comprise means for stirring the contents.

The system may further comprise at least one intermediate container, e.g. a storage tank that is configured to store wastewater, optionally untreated wastewater or wastewater from the first container. The intermediate container may, e.g., be a storage tank that comprises no further components other than the untreated wastewater or wastewater received from the first container. The intermediate container may be an anaerobic tank. The intermediate container may be at least temporarily fluidly connected to the first and/or second container, and optionally to the means for diminishing micropollutant concentration.

For example, the first container can comprise the means for diminishing micropollutant concentration. For example, the means for diminishing micropollutant concentration can be positioned in the first container and can be activated carbon, optionally powdered activated carbon.

For example, the means for diminishing micropollutant concentration positioned between the outlet of the first container and the inlet of the second container may be activated carbon, optionally granular activated carbon, optionally a container (e.g. a filter device) comprising the activated carbon (e.g. granular activated carbon).

For example, the means for diminishing micropollutant concentration being an oxidation process for diminishing micropollutant concentration can, e.g., be positioned between the first and the second container in a separate and mixed/stirred container. The container may be a flow through or a batch reactor.

In an embodiment of the system according to the present invention, which may be combined with any of the embodiments of the system still to be addressed unless in contradiction,
- the system further comprises an anaerobic tank for storing wastewater, optionally urine, and/or a distiller for removing water, and/or
- the first container is a biofilm or suspended biomass system, optionally a membrane aerated biofilm reactor (MABR), and/or
- the second container is a biofilm or suspended biomass system, optionally an MABR.

For example, sulfate reducing bacteria may produce sulfide and urea may be hydrolyzed in the anaerobic tank for storing wastewater, optionally urine.

Biofilm systems, suspended biomass systems and membrane aerated biofilm reactors (MABR) are known in the art as explained above. Optionally, the first and/or second container (e.g. a biofilm system, suspended biomass system or MABR) can be configured such that air and/or oxygen can be passed through, and/or emerging gasses (e.g. gaseous ammonia) can be collected from the biofilm system, suspended biomass system or MABR.

For example, the distiller can be replaced by any means for separating water from nutrients such as nitrate(s), e.g. an osmotic device.

For example, the distiller for lowering the water content can be used to concentrate the nitrogen-treated wastewater of the second container to a concentrated fertilizer.

In an embodiment of the system according to the present invention, which may be combined with any of the embodiments of the system still to be addressed unless in contradiction, the means for diminishing micropollutant concentration are selected from the group consisting of activated carbon, optionally granular or powdered activated carbon, optionally an activated carbon filter, an oxidation process, optionally ozone treatment, optionally ozone treatment in the presence of a catalyst, optionally a titanium catalyst, optionally TiO₂.

In an embodiment of the system according to the present invention, which may be combined with any of the embodiments of the system still to be addressed unless in contradiction,
- the pH in the first container is about 6 to 9.5, optionally 8 to 9, and/or
- the pH in the second container is about 2.3 to 7.5, optionally 6 to 7.

Means for adjusting the pH are explained above in the context of the present method and may be included in the present system.

In an embodiment of the system according to the present invention, which may be combined with any of the embodiments of the system still to be addressed unless in contradiction, the means for diminishing micropollutant concentration are an activated carbon filter positioned between the outlet of the first container and the inlet of the second container.

For example, the activated carbon filter (e.g. granular activated carbon in a filter device) can be configured to receive the wastewater from the first container, e.g. by tubes or pipes or by pouring. The activated carbon filter can be installed such that the wastewater passes through the filter due to gravity, or pressure can be used to pass the wastewater through (the same applies to the method described above).

In an embodiment of the system according to the present invention, which may be combined with any of the embodiments of the system still to be addressed unless in contradiction, the system is configured to collect, and optionally store, gaseous ammonia from the first container, and to introduce the collected ammonia into the second container.

For the purpose of collecting and/or storing gaseous ammonia and introducing this gas into the wastewater in the second container any system (e.g. pipes or tubes) or (storage) container can be present in the system that is suitable for collecting and re-introducing gas. Additionally, suitable means for measuring the amount of gas and/or gas flow can be present in the system to control gas administration.

In another aspect which may be combined with any of the embodiments or aspects preaddressed unless in contradiction, the present invention is directed to a use of the system described herein for wastewater treatment, optionally a use in the method described herein.

### Brief description of the Figures:

- Figure 1: Shows a system according to the present invention including the optional second container.
- Figure 2: Shows a system according to the present invention.
- Figure 3: Shows a system according to the present invention.
- Figure 4: Shows a system according to the present invention including exemplary tubing.
- Figure 5: Shows a system according to the present invention including exemplary tubing.
- Figure 6: Shows a system according to the present invention including the optional device for separating solids from the wastewater and/or a storage tank.
- Figure 7: Shows a system according to the present invention including the optional distiller.
- Figure 8: Shows a system according to the present invention with optional ammonia feed.
- Figures 9-12: Visualize the results of the Examples provided below.

In the following, the invention will be illustrated by reference to Figures and Examples which are not intended to limit the scope of the invention as described in the appended claims.

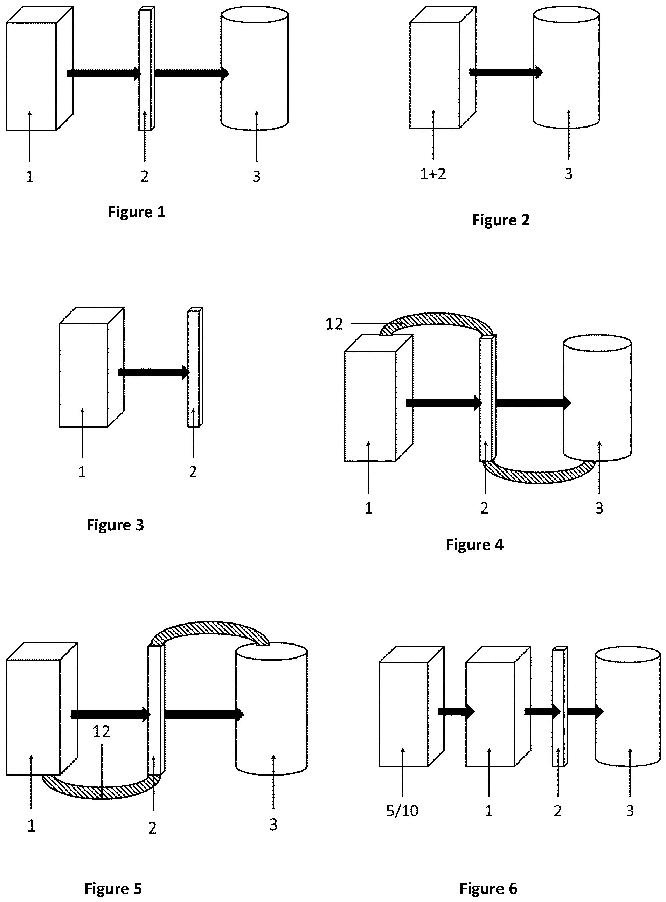

Figure 1 shows a system according to the present invention, with the first container (1), the means (2) for diminishing micropollutant concentration and the optional second container (3). The containers and means shown in this and all subsequent figures can have any shape and can be made from any suitable, e.g. water-tight, materials. The means (2) can, e.g., be a filter comprising (granular) activated carbon or a device suitable for an oxidation process of micropollutants. The bold arrows show that the system is configured such that wastewater is first treated in the first container (1), then by the means (2) and then in the second container (3). The containers and means are configured such that the wastewater can be transferred from one to the next container/means, e.g. by piping/tubing or by pouring.
Figure 2 shows a system according to the present invention, with the first container (1) comprising the means (2) for diminishing micropollutant concentration (e.g. activated carbon) and the optional second container (3). The bold arrow shows that the system is configured such that wastewater is first treated in the first container (1) and therein by the means (2), and is then transferred to the second container (3).
Figure 3 shows a system according to the present invention, with the first container (1) and the means (2) for diminishing micropollutant concentration. The bold arrow shows that the system is configured such that wastewater is first treated in the first container (1), and is then transferred to and treated by the means (2).
Figure 4 shows a system according to the present invention in line with Figure 1, wherein the transfer of the wastewater is achieved through tubing or piping (12). In this case, the wastewater can pass the means (2) by the force of gravity (additional pressure can be applied). The system may comprise suitable means for moving the wastewater through the tubing or piping (12), e.g. a pump.
Figure 5 shows a system according to the present invention in line with Figure 4, wherein the wastewater passes the means (2) under pressure through tubing or piping (12), i.e. not by the force of gravity.
Figure 6 shows a system according to the present invention in line with Figure 1 and further comprising a device (10) for separating solids from the wastewater and/or an anaerobic tank (5) for storing wastewater configured to be positioned upstream of the first container (1). The containers and means are configured such that the wastewater can be transferred from one to the next container/means.

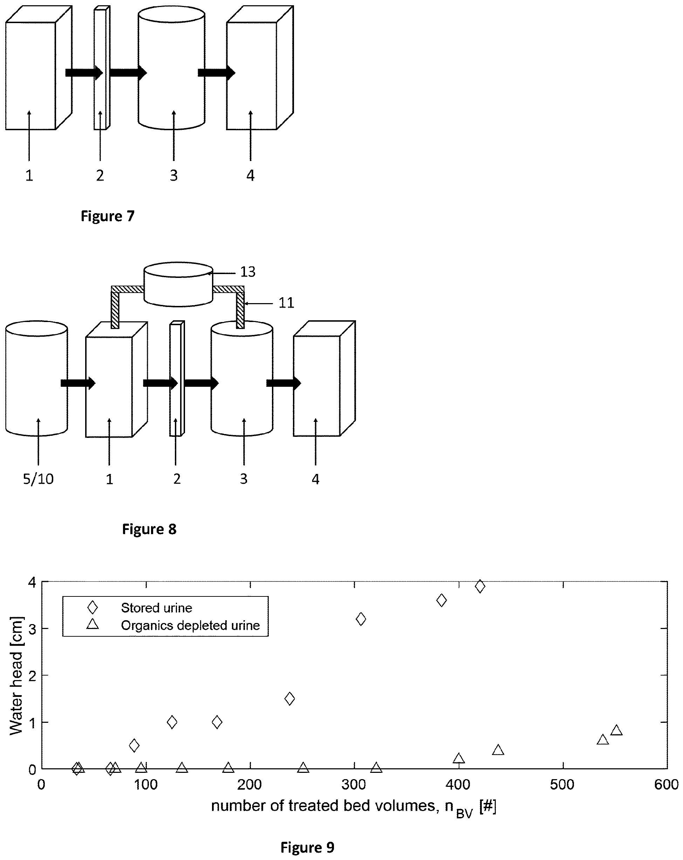

Figure 7 shows a system according to the present invention in line with Figure 1 and further comprising a distiller (4) for removing water (e.g. to concentrate the nitrogen-treated wastewater to a liquid fertilizer) configured to be positioned downstream of the second container (3). The containers and means are configured such that the wastewater can be transferred from one to the next container/means.
Figure 8 shows a system according to the present invention in line with Figure 6 and further comprising piping (11) for transferring gaseous ammonia from the first container (1) to the second container (3). Additionally, the system may comprise a container (13) for storing ammonia. Additionally, suitable means for measuring the amount of gas can be present in the system to control gas administration. The containers and means are configured such that the wastewater can be transferred from one to the next container/means in direction of the arrow. The device (10) for separating solids from the wastewater and/or an anaerobic tank (5) for storing wastewater, as well as the distiller (4) are optional and shown for illustration purposes only.
Figure 9 shows a filter experiment with the "water head" as urine accumulation on a granular activated carbon filter, used from the top to the bottom without any pumping, for example in the context of step (b) of the present method. The x axis describes the "number of treated volumes" and corresponds to the time axis corrected for a variable flow. Organics depleted urine refers to a urine with a diminished COD, for example as achieved in step (a) of the present method.

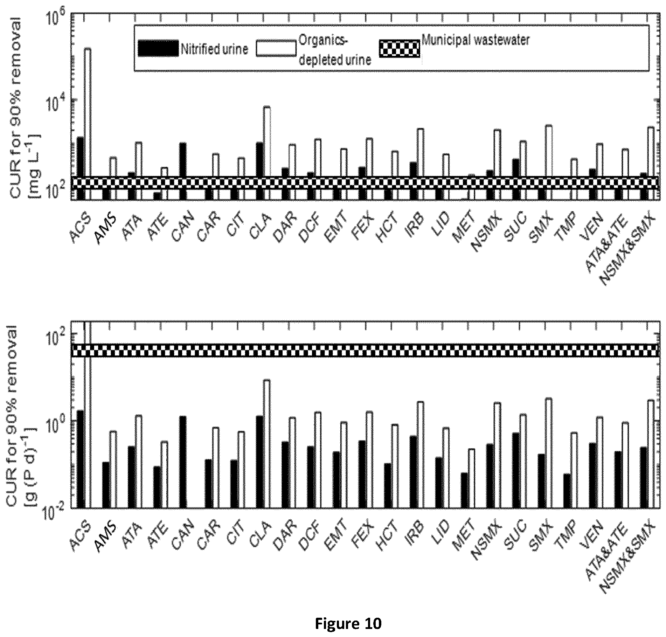

Figure 10 shows the carbon usage rate (CUR, y-axis) for 90% removal of the indicated micropollutants in mg/L (upper graph) and in g per person and day (lower graph) for different micropollutants as identified in Example 2 below, and as, e.g., corresponding to step (b) of the present method. Black solid bars refer to nitrified urine, white bars refer to organics-depleted urine and hatched bars refer to municipal wastewater.

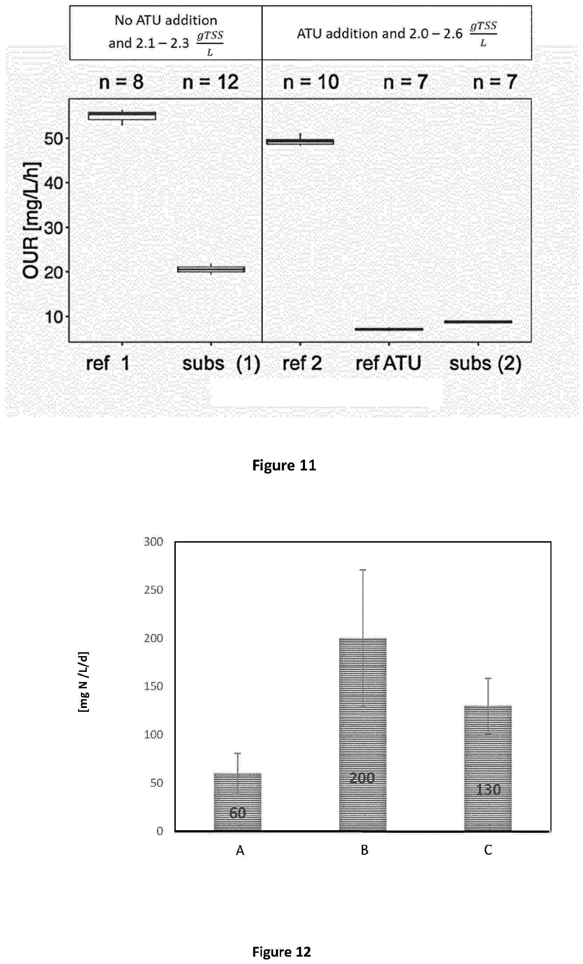

Figure 11 shows the oxygen uptake rate (OUR) in mg/l/h according to Example 3 for *ref 1* (sludge with nitrifiers and heterotrophic bacteria from the urine treatment) *subs (1)* (addition of sulfamethoxazole to the sludge), *ref 2* (a new sludge from the same system), *ref ATU* (heterotrophs only) and *subs(2)* (heterotrophs in the presence of sulfamethoxazole). The abbreviation "ATU" stands for allylthiourea which is an inhibitor of nitrifying bacteria.
Figure 12 shows the nitrification rate (y-axis) in [mg N L⁻¹ d⁻¹] for three different states. A: Nitrification reactor fed with urine; B: After change to organics-diminished urine; and C: 3 month fed with organics-diminished urine, according to Example 4.

### Example 1 Filter clogging

Experiments with granular activated carbon filters used with stored (untreated) urine and with urine that was contacted with microorganisms to diminish the chemical oxygen demand (COD)in a MABR reactor showed that the non-treated urine leads to a very fast clogging of the filter (see Fig. 9). The latter can be avoided by contacting the urine with microorganisms to diminish the chemical oxygen demand (COD). The degree of filter clogging was quantified by measuring the height of the urine column above the filter ("water head") while operating the filter by gravitational force only, without any additional pumping.

### Example 2 Efficiency of micropollutant removal

The carbon concentration (e.g. for step (b) of the present method) to reach a target removal rate for 21 exemplary micropollutants was quantified by using the carbon usage rate (CUR) (see Fig. 10). The CUR expresses the carbon requirement in [mg L⁻¹] . In the upper graph of Fig. 10, this CUR in [mg L⁻¹] shows that indeed more carbon was required for organics-depleted urine compared to nitrified urine and also compared to municipal wastewater* for most substances. However, the CUR in [mg L⁻¹] neglects that only 1.25 L of urine are produced per person and day but 350 L of wastewater. If the carbon requirement per person and day is assessed, which encompasses the described difference, the removal of substances from organics-depleted urine required less carbon than removing them from municipal wastewater.
*municipal wastewater (also in Figure 10) according to: Bourgin, M. et al. 2018, Water Research 129, 486-498; and Wunderlin, P. et al. 2017, Elimination von Spurenstoffen durch granulierte Aktivkohle (GAK) Filtration: Grosstechnische Untersuchungen auf der ARA Bülach-Furt. (Elimination of trace substances by granulated activated carbon (GAC) filtration: large-scale investigations at the ARA Bülach-Furt.), Eawag, Dübendorf. Table 1 - Micropollutants of Example 2 and Fig. 10

| **Name** | | **Substance sub-group** |
|---|---|---|
| Acesulfame | ACS | Sweetener |
| Amisulpride | AMS | Neuroleptic |
| Atenolol | ATE | Beta-blocker |
| Atenolol acid | ATA | Beta-blocker |
| Candesartan | CAN | Sartan |
| Carbamazepine | CAR | Antiepileptic |
| Citalopram | CIT | Antidepressant |
| Clarithromycin | CLA | Antibiotic |
| Darunavir | DAR | Antiretroviral |
| Diclofenac | DCF | Anti-inflammatory |
| Emtricitabine | EMT | Antiviral agent |
| Fexofenadine | FEX | Antihistaminic |
| Hydrochloro-thiazide | HCT | Diuretic |
| Irbesartan | IRB | Sartan |
| Lidocaine | LID | Anesthesic |
| Metoprolol | MET | Beta-blocker |
| N4-Acetyl-Sulfa-methoxazole | NSMX | Antibiotic |
| Sucralose | SUC | Sweetener |
| Sulfa-methoxazole | SMX | Antibiotic |
| Trimethoprim | TMP | Antibiotic |
| Venlafaxine | VEN | Antidepressant |

### Example 3 - Sensitivity of nitrifiers for micropollutants

To test the sensitivity of nitrifiers (e.g. as used in step (c) of the present method) compared to heterotrophs (e.g. as used in step (a) of the present method) an activity test was conducted when sulfamethoxazole, an antibiotic, was added to the biomass in a shock-load concentration of 280 mg/L. It could be shown that nitrifiers were more sensitive towards inhibitory substances at the example of oxygen uptake rates (OUR) in the presence of sulfamethoxazole. Referring to Fig. 11, *ref 1* stands for sludge with nitrifiers and heterotrophic bacteria from the urine treatment, *subs (1)* stands for the addition of sulfamethoxazole to the sludge, *ref 2* stands for the activity with a new sludge from the same system, *ref ATU* stands for the activity of the heterotrophs only (the abbreviation "ATU" stands for allylthiourea which is used as inhibitor of nitrifying bacteria) and *subs(2)* stands for the activity of the heterotrophs in the presence of sulfamethoxazole. The concentration of bacteria in total suspended solids (TSS) for the two sludges was 2.1 to 2.3 gTSS/L for the first part of the experiment without ATU addition and 2 to 2.6 gTSS/L for the second part of the experiment with ATU addition to determine the activity of heterotrophs only.

The addition of sulfamethoxazole to the sludge with nitrifiers and heterotrophs lead to a strong decrease of activity (lower oxygen uptake rate (OUR)). The addition of sulfamethoxazole (*subs (2)*) to a sludge where only heterotrophs were active (*ref ATU*) had only a negligible effect. The activity change in [%] is given in the table below, where it can be shown that only the nitrifiers contributed to the decrease in activity and were therefore more sensitive towards the disruption.

| Heterotrophic activity | ΔActivity of all bacteria | ΔActivity of heterotrophs | ΔActivity of nitrifiers |
|---|---|---|---|
| 14 ± 0 % | -63 ± 2 % | + 23 ± 3 % | -77 ± 4 % |

### Example 4 - Increasing the activity of nitrifiers

Generally, in step (a) of the present method a significant amount of organics is degraded. Nitrifiers and heterotrophs both use oxygen and space to grow and nitrifiers have a lower growth rate, hence, they cannot compete with heterotrophs. By separating organics removal in a reactor, e.g. an MABR as suggested, the nitrification rate could be increased as shown in Fig. 12. The y-axis shows the nitrification rate in [mg N L⁻¹ d⁻¹] for three different states. The nitrification rate during normal operation (nitrification together with organics degradation, A) was about 60 mg N L⁻¹ d⁻¹, a change to feeding pre-treated urine in the MABR (step (a), indicated with letter "B" in Fig. 12) lead to an immediate increase of the nitrification up to 200 mg N L⁻¹ d⁻¹ and reached a steady state of 130 mg N L⁻¹ d⁻¹ (letter "C" in Fig. 12).

## Claims

1. A method for wastewater treatment comprising the following steps:
(a) contacting wastewater with microorganisms to diminish the chemical oxygen demand (COD) in the wastewater,
(b) contacting the wastewater during or after step (a) with means for diminishing micropollutant concentration, and
(c) optionally contacting the wastewater obtained after steps (a) and (b) with nitrifying bacteria to oxidize ammonia to nitrite and/or nitrate.

2. The method according to claim 1, wherein
- before step (a), the method further comprises step (a0) of separating solids from the wastewater, and/or
- the wastewater in step (a) is urine or manure, and/or
- steps (a) and/or (c) are carried out in a biofilm or suspended biomass system, optionally in a membrane aerated biofilm reactor (MABR).

3. The method according to claim 1 or 2, wherein the means for diminishing micropollutant concentration are selected from the group consisting of activated carbon, optionally granular or powdered activated carbon, optionally an activated carbon filter, an oxidation process, optionally ozone treatment, optionally ozone treatment in the presence of a catalyst, optionally a titanium catalyst, optionally TiO₂.

4. The method according to any of claims 1 to 3, wherein the micropollutants are selected from the group consisting of pharmaceuticals, optionally antibiotics, artificial sweeteners and detergents.

5. The method according to any of claims 1 to 4, wherein
- the COD concentration is diminished by about 70 to 80 %, optionally about 50 to 90 %, in step (a), and/or
- the micropollutant concentration is diminished by about 60 to 100 %, optionally by about 80 to 100 % in step (b), and/or
- about 20 to 100 %, optionally about 40 to 60 %, of the ammonia concentration is oxidized to nitrite and/or nitrate.

6. The method according to any of claims 1 to 5, wherein
- the pH in step (a) is set to about 6 to 9.5, optionally 8 to 9, and/or
- the pH in step (c) is set to about 2.3 to 7.5, optionally 6 to 7.

7. The method according to any of claims 1 to 6, wherein step (b) is performed by transferring the wastewater of step (a) through an activated carbon filter before step (c) is performed.

8. The method according to any of claims 1 to 7, wherein the method further comprises
- step (a1) of collecting, and optionally storing gaseous ammonia from step (a) and introducing the gaseous ammonia into the wastewater of step (c), optionally wherein steps (a) and/or (c) are performed in a MABR; and/or
- step (d) of distilling the wastewater obtained from step (c) to less than about 20% of the volume.

9. The method according to any of claims 1 to 8, wherein
- step (a) is performed for about 2 to 100 h, optionally for about 24 to 60 h, and/or
- step (c) is performed for about 24 to 240 h, optionally for about 70 to 120 h.

10. A system for wastewater treatment comprising:
(i) a first container (1) comprising microorganisms suitable for diminishing the chemical oxygen demand (COD) in wastewater,
(ii) means (2) for diminishing micropollutant concentration, and
(iii) optionally a second container (3) comprising nitrifying bacteria suitable for oxidizing ammonia to nitrite and/or nitrate,
wherein
an outlet of the first container (1) is at least temporarily fluidly connected, optionally detachably fluidly connected, to an inlet of the second container, and
the means (2) for diminishing micropollutant concentration are positioned in the first container (1) or between the outlet of the first container and the inlet of the second container (3).

11. The system according to claim 10, wherein
- the system further comprises an anaerobic tank (5) for storing wastewater, optionally urine, and/or a distiller (4) for removing water, and/or
- the first container (1) is a biofilm or suspended biomass system, optionally a membrane aerated biofilm reactor (MABR), and/or
- the second container (3) is a biofilm or suspended biomass system, optionally an MABR.

12. The system according to claim 10 or 11, wherein the means (2) for diminishing micropollutant concentration are selected from the group consisting of activated carbon, optionally granular or powdered activated carbon, optionally an activated carbon filter, an oxidation process, optionally ozone treatment, optionally ozone treatment in the presence of a catalyst, optionally a titanium catalyst, optionally TiO₂.

13. The system according to any of claims 10 to 12, wherein
- the pH in the first container (1) is about 6 to 9.5, optionally 8 to 9, and/or
- the pH in the second container (3) is about 2.3 to 7.5, optionally 6 to 7.

14. The system according to any of claims 10 to 13, wherein the means (2) for diminishing micropollutant concentration are an activated carbon filter positioned between the outlet of the first container (1) and the inlet of the second container (3) .

15. The system according to any of claims 10 to 14, wherein the system is configured to collect, and optionally store, gaseous ammonia from the first container, and to introduce the collected ammonia into the second container.
